# EUROPEAN PATENT APPLICATION

(11) **EP 0 808 800 A2**
(43) Date of publication of application: **26.11.1997**
(21) Application number: 97303384.8
(22) Date of filing: 19.05.1997
(51) Int. Cl.: C01G 25/02

(54) **Praseodymium-zirconium-oxides for catalyst and washcoat**

(30) Priority: 20.05.1996 US 650244
(71) Applicant: FORD MOTOR COMPANY LIMITED, Brentwood, Essex CM13 3BW (GB); FORD FRANCE S. A., 92506 Rueil-Malmaison Cédex (FR); FORD-WERKE AKTIENGESELLSCHAFT, 50735 Köln (DE)
(72) Inventor: Narula, Chaitanya Kumar, Ann Arbor, Michigan 48105 (US); Graham, George Wade, Ann Arbor, Michigan 48195 (US)
(74) Representative: Messulam, Alec Moses

(57) **Abstract**

This invention is single-phase mixed oxides comprising at least 90% by weight praseodymium-zirconium-oxide and made by reacting alkoxides of zirconium and praseodymium by solgel techniques. The oxide may be used as a catalyst or a catalyst support, as for treating exhaust gases generated by an internal combustion engine of automotive vehicles.

## Description

This invention relates to single-phase mixed oxides having high surface area useful as catalysts or catalysts supports and made by sol-gel techniques.

Materials which can alternately take up and release oxygen, i.e., provide oxygen storage, are useful in a number of applications including selective oxidation and oxidative dehydrogenation of organic compounds, separation of oxygen from air, and cryogenic refrigeration. Oxides of lanthanide elements which have variable oxidation states, cerium (Ce), praseodymium (Pr), and terbium (Tb), are particularly useful for catalysis since changes in oxidation state, and thus oxygen content, are relatively easily effected. The increase of atomic number in the sequence Ce-Pr-Tb is accompanied by a corresponding decrease of the stability of MO₂ (M = Ce, Pr) oxides. This in turn reduces the temperature at which oxygen becomes available. Thus, in this regard, praseodymium oxide can be considered to be a superior oxygen storage material as compared to cerium oxide.

Cerium oxide, supported on high-surface-area alumina at a loading of up to 20 wt%, has long been employed in commercial automotive three-way catalysts primarily as an oxygen storage material. As appreciated by practitioners in the art, oxides having a high surface area are preferred for catalytic applications. Despite the fact that praseodymium oxide is able to provide oxygen at a lower temperature, praseodymium has not been commercially used in place of the cerium oxide on the alumina. This is due to the fact that praseodymium oxide reacts with high-surface-area alumina at relatively low temperatures (600°C) and forms an aluminate which is ineffective for oxygen storage.

Recently, new automotive three-way catalyst formulations have been developed in which cerium is deployed as a mixed oxide, primarily with zirconium, having a thermally stable high-surface area so that it is able to function itself as a support for precious metals like palladium. Typically, this mixed oxide is a single phase solid solution having a cubic or tetragonal fluorite-like structure. It can easily be formed by various techniques such as mechanical mixing, coprecipitation, or sol-gel processing. The latter is disclosed in EPO patent application 0611192 published August, 17, 1994. Due to the substantial mutual solubilities of cerium oxide and zirconium oxide, this mixture can exist over a wide range of the ratios of these oxides. Although the precise role of zirconium in the mixed oxide is poorly understood, it is generally thought that it serves to both promote the oxygen storage function of cerium oxide and provide thermal stability to the oxygen storage capacity and specific surface area of the cerium-zirconium oxide, e.g., one with high surface area such as that made by sol-gel processing.

Published information about phases of the praseodymium oxide-zirzonium oxide system suggests that single phase materials cannot be obtained which would be analogous to those known for the cerium oxide-zirconium oxide system. In fact we had previously determined that coprecipitation of praseodymium oxide and zirconium oxide and subsequent thermal treatment did not produce a single-phase praseodymium-zirconium-oxide material, which is in accordance with this information. Hence we believed, prior to our present work, that such materials could not be obtained using other manufacturing techniques, such as sol-gel processing.

In this invention we describe our unexpected findings that the sol-gel processing from praseodymium and zirconium alkoxide precursors led to high surface area, single phase praseodymium-zirconium oxide materials of cubic florite like structures. Furthermore, the materials retained this structure even after calcination at high temperatures.

The present invention is sol-gel processed single-phase, mixed oxides comprising at least 90% by weight praseodymium-zirconium-oxide and are made by reacting zirconium alkoxide with praseodymium alkoxide by sol-gel techniques. The product may be used as a catalyst or a catalyst support. In the latter instance, a catalyst material such as a noble metal may be loaded on these mixed oxides.

According to another embodiment of the invention it is a method for preparing the single-phase mixed oxides disclosed above. The method comprises the steps of dissolving alkoxides of the zirconium and praseodymium metals in a solvent to form a mixture of the alkoxides; adding water into the mixture to cause hydrolysis of the alkoxides and form a product; drying the product to remove the water and solvent; and then heating the dried product to an elevated temperature and for a time sufficient to form said single phase mixed oxides. If desired, they may be further heated to calcine the oxides. According to still another embodiment, it is a method for treating internal combustion engine exhaust gases by exposing the mixed oxides to the exhaust gases, wherein the mixed oxides may be loaded with a catalyst material.

In this invention we describe the sol-gel preparation and properties of high-surface-area, single-phase mixed oxides, praseodymium-zirconium oxide, which allows praseodymium to be deployed in oxide form as a catalyst or catalyst support in which its superiority over cerium-based oxides is maintained. Sol-gel processing from a mixture of alkoxides, e.g., praseodymium alkoxide and zirconium alkoxide, allows the preparation of single-phase, mixed-oxide materials in high purity with controllable pore sizes and high surface area. It is unique in these sol-gel processed single-phase, mixed oxides that, as compared to products made by coprecipitation, the praseodymium oxide does not separate out but forms a solid solution within the zirconium oxide. This unexpectedly provides the advantage that all of the praseodymium oxide as part of single phase praseodymium-zirconium-oxide materials remains available for oxygen storage.

The invention will now be described, by way of example, with reference to the accompanying drawings, in which:
Fig. 1 is a graph of BET specific surface area as a function of ageing treatment for materials made in Example 1 (an embodiment of the present invention), and Examples 3-5 (comparative examples);
Figs. 2a and 2b are graphs of hydrogen consumption as a function of temperature during TPR measurements of materials made in Example 1, according to an embodiment of the present invention, and Example 5 which is a comparative example, respectively;
Fig. 3 is a graph of the powder X-ray diffraction pattern taken from the Example 1 material, according to an embodiment of the present invention, after ageing at 800°C; and
Fig. 4 is a graph of weight loss as a function of time upon heating in air for the materials of Example 1 and 3, the latter being a comparative example.

The present invention is a sol-gel processed material for a catalyst or catalyst support, the material being single-phase, mixed oxides. In particular, the mixed oxides include at least 90% by weight, more preferably, at least 95% by weight praseodymium-zirconium-oxide. They are made using sol-gel techniques from the alkoxides of zirconium (Zr) and the praseodymium (Pr). The present invention metal oxides may be employed as catalyst material or in catalyst formulations as high surface area powders on which active metals can be impregnated.

Sol-gel techniques for forming oxides are known in the art and taught, e.g., in U.S. Patent No. 5,210,062 to Narula et al. According to one preferred embodiment of the present invention for making the single phase mixed oxides, alkoxides of the zirconium and praseodymium metals are dissolved in a solvent to form a mixture of the alkoxides; water is added into the mixture to cause hydrolysis of the alkoxides and form a product; the product is dried to remove the water and solvent; and then the dried product is heated to an elevated temperature and for a time sufficient to form said single phase mixed oxides. If desired, this oxide material may be further heated to calcinate the mixed oxides.

The zirconium and praseodymium metal alkoxide may be selected from, but is not limited to, alkoxides such as isopropoxide, isoproxide isoproponolate, butoxide (n-, s-, or tert-), and ethoxide. Still other alkoxides useful in this invention will be apparent to those skilled in the art in view of the present disclosure. The preferred alkoxides are isopropoxide and isopropoxide isoproponolate. The ratio of the alkoxides, i.e., zirconium alkoxide to praseodymium alkoxides dissolved in the solvent is not critical and may vary widely. Generally, the ratio will be between 1:9 and 9:1 based on the molar ratio of the zirconium to the praseodymium. Selection of the optimal ratio of these alkoxides will depend on such factors as solubility of the precursors, gelation, and desired ratio of elements in the mixed oxide product, desired oxygen storage capacity and surface area, etc. Preferably, the zirconium:praseodymium ratio in the sol-gel processed single-phase mixed oxides product is between about 2:1 to 1:2, more preferably being 1:1 because it provides more optimal parameters of such properties as surface area and oxygen storage capacity. In addition, other metals may be incorporated into the oxide lattice by mixing them along with the zirconium and praseodymium alkoxides. For example, materials like barium, lanthanum, silica (SiO₂) or yttrium, useful to provide stability to the zirconium against thermal sintering may be included in the final oxides product. Generally, when such additional materials are incorporated into the alkoxide mixture, they as added as a metal but may be included in alkoxide, salt, or sol form. When included, they are generally present in an amount up to about 10 weight percent, preferably being in about 5-10 weight percent based on the weight of the zirconium. Thus the present invention mixed oxides comprise substantially as a base, a mixture of praseodymium oxide and zirconium oxide, i.e., at least 90% by weight and preferably at least 95% by weight of this base. The other materials are seen to be merely dopants to further improve physical properties like high temperature stability.

The alkoxides are added into a solvent in which they are soluble like tetrahydrofuran (THF) , diethylether, monoglyme, and diglyme. Dissolving the alkoxides in the solvent may be done at any temperature although room temperature is most convenient. The alkoxides are generally mixed into the solvent with stirring to aid their dissolution and the stirring also assures uniformity of the mixture to allow proper reaction. Water is then added to the mixture to induce hydrolysis. The amount of water added is optimally that necessary to hydrolyse all alkoxy groups. However, it is not necessary to hydrolyse all the hydroxyl groups. Generally, water in an amount sufficient to hydrolyse at least 50% of the alkoxy groups would preferably be added. After dissolution and hydrolysis, gel formation may take place. This happens when bi-dentendate chelate materials like 2-4, pentanedione have not been added. If the latter is added, gel formation is retarded and does not generally take place until the solvent and water is removed to some extent. The mixture, in which the alkoxides have reacted to form a product (which may be a gel as described above), is hence subjected to drying to remove the solvent and the water. This is generally carried out by warming the product or by subjecting the product to a vacuum.
Preferably, the product is dried in vacuo. After the product is dried, it is subjected to elevated temperatures sufficient to form the mixed oxides product. Subsequently, if desired, the oxide product may be further heated to calcine the mixed oxides material. Generally, the calcining temperature is at least 200°C, or in those situations where the product is to be used in automotive exhaust systems, it calcined at a temperature of at least about 500°C, similar to that it will experience during use in the system. The time of calcination often is at least 4 hours, although the time can vary widely. Preferably, if the oxide product is to be used in an automotive exhaust system it is calcined for about 2 to 6 hours at 600°C to properly prepare it for use. Calcination removes hydroxy groups.

By using sol-gel techniques to make the oxide product, the pore size is controllable and the resulting product has a desirably high surface area. It is possible to control pore size by using sol-gel techniques by varying gelation conditions (e.g., concentration, temperature, using modified precursors, template assisted synthesis, etc.) as would be apparent to one skilled in the art in view of the present disclosure. Generally it is desirable for the product to have a surface area of at least 50m²/g and a pore size of between 30 and 60 angstroms. This surface area and pore size are optimal because they slow the sintering of Platinum Group Metals (PGM), allow for high dispersion of PGM, and improve exhaust gas retention time which should result in improved interaction with PGM. However these parameters of pore size and surface area are not meant to be limitations on the invention. Optimal physical parameters of the oxides product like pore size will depend on the particular intended use of the product. While a particular sol-gel method for making the present invention oxide has been described in detail above, still other embodiments of sol-gel techniques may be employed as would be apparent from the present disclosure.

Preparing oxides by sol-gel techniques for use as washcoat or catalyst materials in automotive exhaust reduction has not before, however, found wide acceptance. This is due to the higher cost of the sol-gel preparation of materials. More importantly, some oxides prepared by sol-gel techniques undesirably lose beneficial surface properties at the operating temperature of automotive catalysts. Thus, the materials processed by sol-gel type methods will be likely to be used in automotive catalysis provided (a) they offer advantages over conventional methods which can justify the increased cost and (b) the beneficial surface properties can be retained during extended exposure to the catalyst operating temperatures. Here we describe single-phase mixed oxides based on praseodymium-zirconium oxide which were unexpectedly made by sol-gel techniques and which have excellent oxygen storage properties and maintain those properties at high temperatures. Hence, the present invention single-phase mixed oxides fulfil both criteria to commercially justify the use of a sol-gel method for their preparation. That is, in addition to having high surface area, they retain it under high temperature operating conditions experiences in, e.g., exhaust gas systems of automotive vehicles.

As described above, we unexpectedly found that sol-gel processing from praseodymium and zirconium alkoxide precursors led to gels which after drying and heating furnished high surface are, single phase praseodymium-zirconium oxide materials of cubic florite-like structures. Furthermore, the materials retained this structure even after calcination at high temperatures. We believe that the sol which is a mixture of extremely small particles (about 2000 Angstroms) of praseodymium and zirconium oxide form gels on concentrating with both components unable to grow large particles of pure oxide. While this theory has been provided, neither its understanding nor validity is necessary to the practice of the invention.

The single-phase oxides of the invention can be formed into configurations including being cast into membranes to be used as catalysts themselves for treating, e.g., automotive exhaust gases. In addition, these oxides can be used as supports (washcoats) to be loaded with catalytic materials like noble metals such as platinum, palladium, rhodium or mixtures thereof. These latter metals are conventionally used as three-way catalysts for treating carbon monoxide, hydrocarbons and nitrogen oxides present in internal combustion engine exhaust gases. Still other uses for these oxides include, but are not limited to, nitric acid decomposition, treatment of flue gases, oxidative dehydrogenation. These materials have the advantage that they provide lattice oxygen for catalytic oxidation. If the product is cast into a membrane or used as a washcoat to carry other catalytic materials, it may be loaded with these materials in any known way. One common way is by impregnation of the catalytic material from a solution of its soluble salt. For example, platinum is commonly impregnated from chloroplatinic acid or organ metallic platinum (PT) compounds like Pt (dibenzylidene acetone)₂, and (cyclooctadienyl)₂PtCl₂. After the catalytic material is impregnated into the oxide or a slurry is formed therewith, it is generally subjected to drying and calcining. It may be applied onto usual substrates like ceramic or metallic honeycomb or cordeirite monoliths. For use in automotive vehicle exhaust, it would then be placed in the vehicle catalytic converter, which during use, is subjected to exhaust gases.

The present invention single-phase product is unique in that the lattice framework includes chemical bonds between the Zr-Pr-O. In contrast, a simple mixture of zirconia and praseodymia has two phases, where these bonds do not exist. Advantageously, in our single-phase material the intimate contact amongst Pr, Zr and O (oxygen) by way of the chemical bonds is expected to result in higher thermal stability of specific surface area.

### Examples

A sol-gel process was employed to make two batches of Pr-Zr oxide (equimolar Pr and Zr), all according to embodiments of the present invention (examples 1 and 2) and three batches of Ce-Zr oxide (all with equimolar Ce and Zr concentrations and one containing an additional 2% Ba), as comparative examples 3-5, not according to this invention.

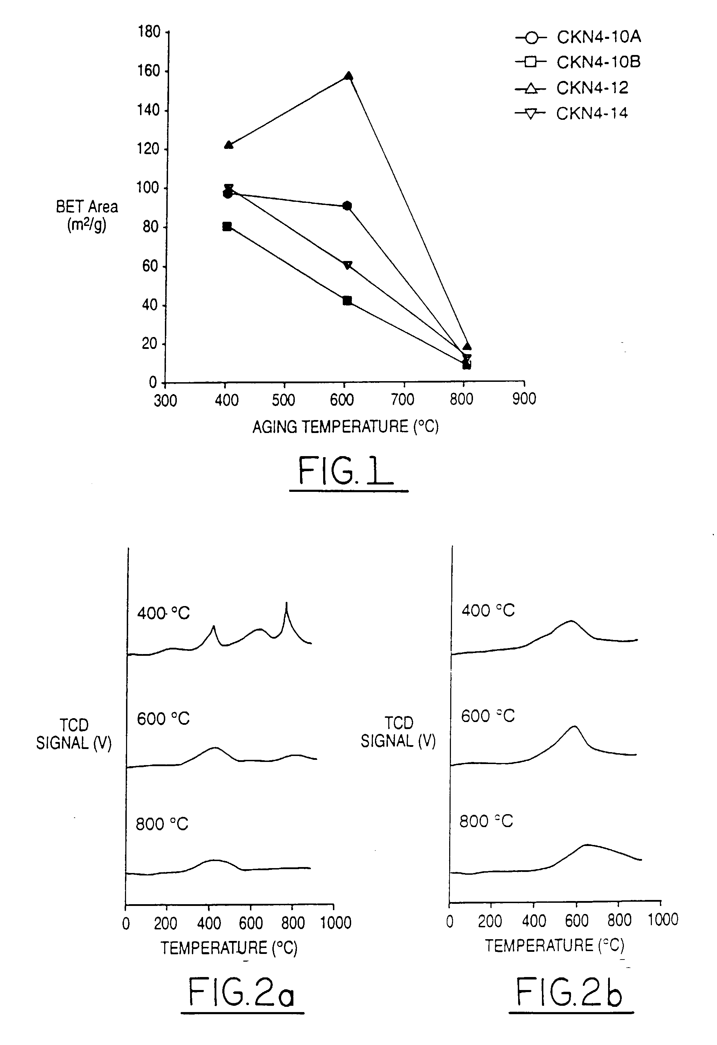

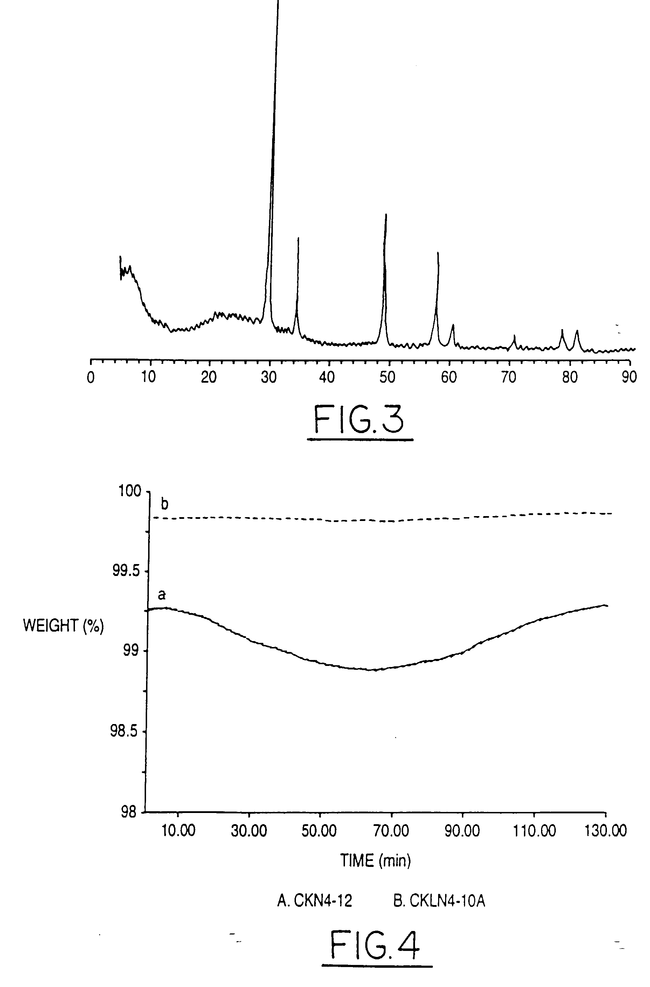

**Example 1**: High-Surface-Area Praseodymium-Zirconium oxide Praseodymium isopropoxide (2.05g) and zirconium isoproxide isoproponolate (2.5g) were dissolved in 40 mL tetrahydrofuran (THF) and the reaction mixture was cooled to -78°C. Water (1.0 mL) mixed with THF (20 mL) was added to the reaction mixture with stirring. Immediate hydrolysis takes place and a gel is obtained on warming. The volatiles were removed and gel was pyrolyzed at 400°C to obtain 1.97 g residue. The XRD of the powder revealed a single phase with cubic fluorite-like structure. Fig. 1 is a graph of BET specific surface area as a function of ageing treatment (4 hours in air) temperature materials of Examples 1, 3, 4, and 5 corresponding to CKN4-12, 10 A, 10B, and 14, respectively. This figure shows that the present invention embodiment of Example 1 has comparable area and thermal stability to the comparative materials of Examples 3, 4, and 5, i.e., these latter materials not being according to the present invention. Figs. 2a and 2B are graphs of hydrogen consumption as a function of temperature during TPR measurements of the Example 1 material (Fig. 2A) and one comparative material (Example 5) after ageing (4 hours in air) at the indicated temperatures. These figures show that the invention materials (Example 1) always releases oxygen (undergoes reduction) at lower temperature than the comparative material. The XRD of the powder after ageing at 800°C in air for four hours shows that a single phase with cubic fluorite-like structure remains stable [Fig 3]

### Example 2: High-Surface-Area Praseodymium-Zirconium oxide

In a second method, praseodymium isopropoxide (2.05g) and zirconium isopropoxide (2.5g) were dissolved in THF (40 mL) and reacted with 2,4-pentanedione (2.58g) at room temperature. The reaction mixture was then cooled to -78°C and water (1.0 mL) mixed with THF (20 mL) was added to it dropwise. A clear solution was obtained which was stripped of volatiles in vacuum. Gel formation takes place during the removal of volatiles due to increase in concentration of the material. The resulting gel material was pyrolyzed at 400°C to obtain 1.94 g powder. The XRD of the powder revealed a single phase with cubic fluorite-like structure. BET surface area 72 m²/g.

### Example 3: Comparative Cerium-Zirconium oxide

Cerium isopropoxide (4.85g) and zirconium isoproxide isoproponolate (5.0g) were dissolved in THF (60 mL) and the reaction mixture was cooled to -78°C. Water (2.0 mL) mixed with THF (20 mL) was added to the reaction mixture with stirring. Immediate hydrolysis takes place and a gel is obtained on warming. The volatiles were removed and gel was pyrolyzed at 120°C to obtain 4.18 g residue. The XRD of the powder revealed a single phase with cubic fluorite-like structure. It exhibited a high surface area. [CKN4-10A of Fig. 1]

### Example 4: Comparative Cerium-Zirconium oxide

In this alternative method, cerium isopropoxide (4.85g) and zirconium isopropoxide (5.0g) were dissolved in THF (60 mL) and reacted with 2,4-pentanedione (5.17 g) at room temperature. The reaction mixture was then cooled to -78°C and water (2.0 mL) mixed with THF (20 mL) was added to it dropwise. A clear solution was obtained which was stripped off volatiles in vacuum to form a gel. The resulting materials was pyrolyzed at 400°C to obtain 3.8 g powder. The XRD of the powder revealed a single phase with cubic fluorite-like structure. It had a high surface area [CKN4-10B of Fig. 1].

### Example 5: Comparative Cerium-Zirconium oxide

Cerium isopropoxide (4.85g) and zirconium isopropoxide isoproponolate (5.0g) were dissolved in THF (60 mL) and reacted with barium metal (0.07 g). After complete dissolution of barium, the reaction mixture was cooled to - 78°C. Water (2.0 mL) mixed with THF (20 mL) was added to the reaction mixture with stirring. Immediate hydrolysis takes place and a gel is obtained on warming. The volatiles were removed and gel was pyrolyzed at 120°C to obtain 4.1 g residue. The XRD of the powder revealed a single phase with cubic fluorite-like structure. It had a high surface area. [CKN 4-14 of Fig. 1]

### Tests

The BET surface areas of the various materials as a function of ageing treatment (4 hours in air) temperature is shown in Fig. 1, and Temperature Programmed Reduction (TPR) traces for one of the Ce-Zr oxides (with Ba, example 5)and the Pr-Zr oxide (Example 1) are shown in Figs. 2b and 2a, respectively. Both of the mixed oxides retained their original structure after air ageing and TPR measurements. The broad feature between 400°C and 600°C in the TPR traces from the Ce-Zr oxide after 400°C and 600°C ageing is presumably associated with reduction of the surface, and thus its intensity is expected to diminish as surface area is lost upon ageing. Movement of the peak toward higher temperatures is consistent with progressively more bulk-like reduction. Although the origin of peaks in the TPR trace of the Pr-Zr oxide after 400°C ageing is not clear, the peak near 400°C in the TPR trace after 800°C ageing is probably also associated with reduction of the bulk. In any case, the reduction begins at lower temperature for the Pr-Zr oxide than the Ce-Zr oxide after the corresponding ageing treatment. Fig. 4 is a graph of weight loss as a function of time upon heating in air from 200°C to 800°C at 10°C per minute, holding at 800°C for 5 minutes, and then cooling in air from 800°C to 200°C at 10°C per minute. It involves the materials of Example 1 (CKN4-12) and comparative material of Example 3 (CKN4-10A) after ageing (4 hours in air) at 800°C. As shown in Fig. 4, TGA measurements performed on the Ce-Zr oxide after air ageing at 800°C revealed little or no reversible oxygen exchange in air, but corresponding results from the Pr-Zr oxide were comparable to those from praseodymium oxide, which yields substantially more reversible oxygen exchange than cerium oxide.

## Claims

1. Single-phase mixed oxides comprising at least 90% by weight praseodymium-zirconium-oxide, said mixed oxides made by reacting zirconium alkoxide with praseodymium alkoxide by sol-gel techniques.

2. The single-phase mixed oxides according to claim 1, wherein said alkoxide is selected from the group consisting of isopropoxide, isoproxide isoproponolate, ethoxide and butoxide.

3. The single-phase mixed oxides according to claim 1 or 2, wherein said zirconium alkoxide and said praseodymium alkoxide are reacted in a ratio of from 1:9 to 9:1 based on the molar ratio of zirconium to praseodymium.

4. The single-phase mixed oxides according to claim 3, wherein said ratio is about 1:1.

5. The single-phase mixed oxides according to any one of the preceding claims, wherein said sol-gel process comprises:
dissolving said alkoxides in a solvent to form a mixture;
adding water into the mixture to cause hydrolysis of said alkoxides to form a product;
drying said product to remove water and solvent; and
heating the dried product to an elevated temperature and for a time sufficient to form said single phase mixed oxides.

6. A process for making single-phase mixed oxides comprising at least 90% by weight praseodymium-zirconium-oxide, said process comprising the steps of:
dissolving zirconium alkoxide with praseodymium alkoxide in a solvent to form a mixture;
adding water into the mixture to cause hydrolysis of said alkoxides to form a product;
drying said product to remove water and solvent; and
heating the dried product to an elevated temperature for a time sufficient to form said single phase mixed oxides comprising at least 90% by weight praseodymium-zirconium-oxide.

7. A method according to claim 6, wherein said alkoxide is selected from the group consisting of isopropoxide, isoproxide isoproponolate, ethoxide and butoxide.

8. A method according to claim 6 or 7, wherein said zirconium alkoxide and said praseodymium alkoxide are reacted in a ratio of from 1:9 to 9:1 based on the molar ratio of zirconium to praseodymium.

9. A method according to claim 8, wherein said ratio is about 1:1.

10. A method according to any one of claims 6 to 9, wherein said elevated temperature is at least 200°C.
